(19) Europäisches Patentamt
European Patent Office
Office européen des brevets

(11) **EP 2 266 348 B1**

(12) **EUROPEAN PATENT SPECIFICATION**

(45) Date of publication and mention
of the grant of the patent:
**20.09.2017 Bulletin 2017/38**

(21) Application number: **09721494.4**

(22) Date of filing: **20.03.2009**

(51) Int Cl.:
*H04W 36/00* (2009.01)     *H04W 24/10* (2009.01)

(86) International application number:
**PCT/US2009/037821**

(87) International publication number:
**WO 2009/117667 (24.09.2009 Gazette 2009/39)**

(54) **METHOD OF SUPPORTING CELL RESELECTION IN AN EVOLVED HSPA NETWORK**

VERFAHREN ZUR UNTERSTÜTZUNG VON ZELLENNEUAUSWAHL IN EINEM EVOLVIERTEN HSPA-NETZWERK

PROCÉDÉ DESTINÉ À PRENDRE EN CHARGE LA RESÉLECTION DE CELLULES DANS UN RÉSEAU HSPA ÉVOLUÉ

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **21.03.2008 US 38656 P**

(43) Date of publication of application:
**29.12.2010 Bulletin 2010/52**

(73) Proprietor: **InterDigital Patent Holdings, Inc.**
**Wilmington, DE 19809 (US)**

(72) Inventors:
• **PANI, Diana**
  **Montreal**
  **Quebec H3H 2N8 (CA)**
• **DIGIROLAMO, Rocco**
  **Laval**
  **Quebec H7K 3Y3 (CA)**
• **MARINIER, Paul**
  **Brossard**
  **Quebec J4X 2J7 (CA)**
• **CAVE, Christopher, R.**
  **Montreal**
  **Quebec H9A 3J2 (CA)**

(74) Representative: **Awapatent AB**
**P.O. Box 1066**
**251 10 Helsingborg (SE)**

(56) References cited:
**GB-A- 2 287 858     US-A1- 2007 173 254**

• **PANASONIC: "Cell Reselection and evaluation during RRC Connection procedure" 3GPP DRAFT; R2-080079_CELL_RESELECTION_AND_EVALUATION_ AT_CALL_SETUP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Sevilla, Spain; 20080114, 8 January 2008 (2008-01-08), XP050137974**
• **HUAWEI: "Mobility consideration for UL enhancement in CELL_FACH" 3GPP DRAFT; R2-080859 MOBILITY ANALYSIS ABOUT E-RACH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Sorrento, Italy; 20080211, 4 February 2008 (2008-02-04), XP050138674**
• **NOKIA CORPORATION ET AL: "On Mobility" 3GPP DRAFT; R2-080996 MOBILITY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Sorrento, Italy; 20080211, 4 February 2008 (2008-02-04), XP050138790**

- **INTERDIGITAL: "Triggering of cell reselection in Cell_FACH" 3GPP DRAFT; R2-084928, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20080818, 18 August 2008 (2008-08-18), XP050319825 [retrieved on 2008-09-03]**

**Description**

FIELD OF INVENTION

This application is related to wireless communications.

BACKGROUND

Wireless transmit receive units (WTRUs) in a UMTS Terrestrial Radio Access Network (UTRAN) are in one of 2 modes, idle mode or connected mode. Based on WTRU mobility and activity while in connected mode, the UTRAN is able to direct the WTRU to transition between a number of sub-states, e.g., CELL_PCH, URA_PCH, CELL_FACH, and CELL_DCH. User plane communication between the WTRU and the UTRAN is only possible while in the CELL_FACH and CELL_DCH states.

The CELL_DCH state is characterized by dedicated channels in both the uplink and the downlink. On the WTRU side, this corresponds to continuous transmission and reception. As such, CELL_DCH can be demanding on user power requirements. The CELL_FACH state does not use dedicated channels, and therefore, allows better power consumption at the expense of a lower uplink and downlink throughput.

The CELL_FACH is well-suited for signaling traffic (for example, the transmission of CELL/URA UPDATE messages), and for applications requiring low uplink throughput. In Release 7 and earlier, which in CELL_FACH, uplink communication is achieved through a random access transport channel (RACH) mapped to a packet random access channel (PRACH) physical channel. The RACH is contention based protocol with a power ramp-up procedure to acquire the channel and to adjust transmit power.

Downlink communication is through a shared Forward Access Transport Channel (FACH) mapped to a Secondary Common Control Physical Channel (S-CCPCH) physical channel or through the High Speed Dedicated Physical Channel (HS-DPCH).

Mobility is handled autonomously by the WTRU in CELL_FACH. The concept of soft handover does not currently (as of Release 7 of the standard) exist within CELL_FACH. The WTRU independently takes measurements, and determines which cell to camp on.

System information during CELL_FACH is read from a broadcast channel (BCH). This information includes the setup details for the uplink RACH, the downlink FACH and High Speed Downlink Shared Channel (HS-DSCH) channels to be used in CELL_FACH.

In CELL_FACH, when a WTRU is camped in a cell, the WTRU regularly searches for a better cell according to a set of criteria broadcasted over the System Information Broadcast (SIB). The WTRU takes signal strength measurements of neighbouring cells, for example, in the same frequency, other frequencies, and other Radio Access Technology (RATs). When a better cell is found according to the set of criteria, the WTRU performs cell reselection to the new cell.

The WTRU is configured to take the Common Pilot Channel (CPICH) Received Signal Code Power (RSCP) measurement or CPICH Ec/Io measurements. In order to camp on a cell, or be considered for cell selection, the following criteria must be satisfied:

$$\text{Squal} > 0 \text{ AND } \text{Srxlev} > 0$$

where:

$$\text{Squal} = \text{Measured Ec/Io} - \text{Qqualmin};$$

and

$$\text{Srxlev} = \text{Measured RSCP} - \text{Qrxlevmin} - \max(\text{WTRU\_TXPWR\_MAX\_RACH} - \text{P\_MAX}, 0);$$

Squal is the cell selection quality value, Srxlex is the cell selection receive (Rx) level value, Qqualmin is the minimum required quality level in the cell (dB), and Qrxlevmin is the minimum required Rx level in the cell. In addition WTRU_TXPWR_MAX_RACH denotes the maximum transmit power level a WTRU may use when the WTRU accesses the uplink RACH, as dictated by the network and signaled through the broadcast system information, and P_MAX denotes the maximum output of a WTRU.

Once measurements on neighboring cells have been taken based on information broadcasted and received in SIB11 or SIB12, the WTRU ranks the cells according to cell-ranking criterion R, defined by:

$$Rs = Qmeas,s + Qhyst\_s + Qoffmbms;$$

and

$$Rn = Qmeas,n - Qoffset\_s,n + Qoffmbms;$$

where Qmeas is the Quality value of the received signal derived from the averaged CPICH Ec/No or CPICH RSCP, and Qhysts is the Hysteresis value. The neighboring cell has to be better than the serving cell by at least the factor "Qhyst" (Qhyst1s and Qhyst2s are used when the quality measure for cell reselection is set to CPICH RSCP and CPICH Ec/No, respectively). Qoffsetsn,n is the Offset between the two cells. Qoffset1s,n and Qoffset2s,n are used when the quality measure for cell reselection is set to CPICH RSCP and CPICH Ec/No respectively; and Qoffmbms is the additional offsets added to cells belonging to MBMS.

This ranking criteria does not use Hierarchical Cell Structure (HCS). When HCS is used, an additional Temporary Offset (TO) is added to the neighbor ranking criteria. The subscript "s" refers to serving cell and "n" refers to neighboring cell.

Using the cell ranking criteria R defined above, the serving and neighboring cells are ranked by the WTRU. If a cell is ranked as the best cell, the WTRU reselects to the new cell when the new cell is ranked better than the serving cell during a certain time interval of Treselection. Treselection is a value that is broadcasted in SIB3/4, and is an integer value that typically ranges from 0 - 31 seconds. If the quality measure is selected as CPICH EC/No, the WTRU performs 2 rankings - the first CPICH RSCP, and the second CPICH Ec/No. The second ranking is attempted if the first ranking determines that a neighbor cell is better than the serving cell.

The parameters for cell selection/reselection (namely Qhyst and Treselection) may be common to all states (e.g., IDLE, CELL_FACH, CELL/URA_PCH), or they can be specifically tailored for FACH and PCH, which are denoted by FACH and PCH subscripts (Treselection_PCH & Treselection_FACH).

The cell reselection procedure also takes into account the motion and speed of the WTRU. If the number of cell reselections during a system indicated time period, non-HCSTCRmax or TCRmax, exceeds a system indicated number non-HSC_NCR or NCR, or if the network has ordered the WTRU to consider itself to be in a high-mobility state, the WTRU is considered to be in a "high-mobility" state. When high-mobility state is detected, the WTRU multiplies Treselection by the information element (IE) Speed dependent Scaling Factor for Treselection.

Recent work by the standardization bodies has identified the possibility of using enhanced DCH (E-DCH) in CELL_FACH. E-DCH in the UL is a feature that was introduced in Release 6 of the 3GPP specifications to increase uplink throughput while in CELL_DCH. The Enhanced Uplink operates on a request/grant principle. WTRUs send an indication of the requested capacity they require through a combination of mechanisms, while the network responds with grants to these requests. These grants are generated by the Node B scheduler. At the same time, Hybrid ARQ is used for the physical layer transmissions.

To facilitate the above mechanisms, two new UL physical channels (one for control, E-DPCCH, and one for data, E-DPDCH), as well as three new DL physical channels (two for transmission of grants, and one for fast Layer 1 ACK/NACK) were introduced. As such, the Node B can issue both absolute grants and relative grants. Grants are signaled in terms of a power ratio. Each WTRU maintains a serving grant, which it can convert to a payload size. For Release 7 and earlier WTRUs using E-DCH in CELL_DCH, mobility is handled by the network through soft handover and the concept of active sets.

E-DCH UL transmission in CELL_FACH state relies on a set of broadcasted common E-DCH resources shared amongst WTRUs in CELL_FACH state. When a WTRU has UL data to transmit, the WTRU randomly selects a PRACH code, signature sequence, and sub-channel slot and performs an access request using, for example, Release 99 RACH preamble ramping procedure. Each signature sequence is associated with a default E-DCH resource. The Node B confirms the use of this E-DCH resource by signalling an Acquisition Indication (AI) = 1 value on the corresponding AICH signature. However, if this default resource is blocked, or assigned to another WTRU, then the Node B assigns the WTRU another E-DCH resource from the set of broadcasted common E-DCH resources. This is accomplished by signalling AI = -1 on the corresponding AICH signature (i.e. a NACK), which is an indication for the WTRU to look at the extended set of AIs (E-AIs) if configured.

The E-AIs can signal a NACK or an index to an E-DCH resource to be used by the WTRU. More specifically, the information on E-AICH represents a number to add to the table index of the default configuration (modulo the number of configurations).

Once a resource has been assigned or acknowledged, the WTRU initiates UL transmission. As part of initial transmission, the WTRU enters a collision resolution phase for Dedicated Traffic Channel (DTCH)/ Dedicated Control Channel (DCCH), whereby the E-DCH Radio Network Temporary Identifier (E-RNTI) of the WTRU is included in each MAC PDU until a contention resolution response has been received. The WTRU receives the contention resolution response over the E-DCH Absolute Grant Channel (E-AGCH). Once the E-RNTI is decoded in the E-AGCH, the WTRU continues normal UL transmission until the WTRU has no more data to transmit. Once there is no more data to transmit, the E-DCH resources are released. Alternatively, at any time, the network may move the WTRU to CELL_DCH state.

The release of resources can be explicitly indicated by the network via the E-AGCH or can be determined implicitly by the WTRU at the expiration of a timer.

As part of recent agreements in 3GPP, it has been agreed that current cell reselection criteria do not apply while a shared E-DCH resource has been allocated to a WTRU. With the introduction of E-DCH transmissions in CELL_FACH, degradation in performance may result if the WTRU is not allowed to execute cell reselection while E-DCH resources are allocated. For example, interference to a neighboring cell on the same frequency may occur. Also, a radio link failure may occur, causing the WTRU to lose its connection to the cell, or the cell reselection criteria may be met while the WTRU has E-DCH resources allocated. For example, the 3GPP TSG-RAN WG2 contribution R2-080859, entitled "Mobility consideration for UL enhancement in CELL-FAC", by Huawei, describes a method whereby cell reselection is suspended during the period that a CELL FACH UE uses UL E-DCH resources.

As such, there exists a need for an improved method and apparatus for handling cell reselection while E-DCH resources are allocated.

SUMMARY

The above objectives are achieved through the subject-matter of the independent claims. Preferred embodiments are set out in the dependent claims.

BRIEF DESCRIPTION OF THE DRAWINGS

A more detailed understanding of the invention may be had from the following description of a preferred embodiment, given by way of example and to be understood in conjunction with the accompanying drawing wherein:

Figure 1 shows an example block diagram of a wireless communication system; and
Figure 2 shows an example flow diagram of the disclosed method.

DETAILED DESCRIPTION

When referred to hereafter, the terminology "wireless transmit/receive unit (WTRU)" includes but is not limited to a user equipment (WTRU), a mobile station, a fixed or mobile subscriber unit, a pager, a cellular telephone, a personal digital assistant (PDA), a computer, or any other type of user device capable of operating in a wireless environment. When referred to hereafter, the terminology "base station" includes but is not limited to a Node-B, a site controller, an access point (AP), or any other type of interfacing device capable of operating in a wireless environment.

The terms enhanced random access channel (E-RACH), Enhanced RACH and E-DCH in CELL_FACH State are used interchangeably throughout this disclosure to describe the resource that is used by a WTRU for uplink (UL) access while in CELL_FACH and IDLE states, whereby the WTRU is assigned an E-DCH resource after a contention-based preamble transmission. The terminology triggering of cell reselection criteria, refers to the time when the WTRU performs cell reselection to a new cell which is better ranked than the serving cell for a time interval Treselection (where Treselection includes the scaling factor for high mobility WTRUs). Treselection includes one or a combination of the following broadcasted values: Treselections, Treselection_s PCH, Treselection_s FACH and takes the scaling factors into account.

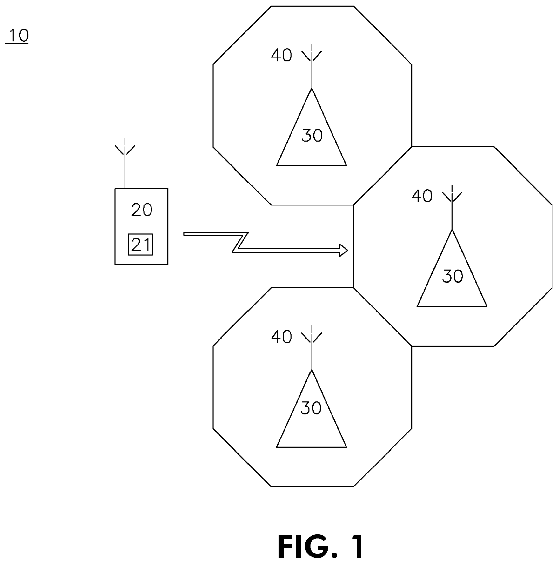

Referring to Figure 1, a wireless communication network (NW) 10 comprises one or more WTRUs 20, each including a processor 21 configured to implement the disclosed method, one or more eNBs 30, and one or more cells 40. Each cell 40 comprises one or more eNBs (NB or eNB) 30.

As those skilled in the art know, cell reselection includes determining a target cell based on cell reselection criteria. If the target cell is different from the cell that WTRU 20 was connected to (i.e., the source cell), WTRU 20 ceases receiving on the source cell, starts receiving system information on the target cell and performs CELL_UPDATE procedure.

A method and apparatus are disclosed which avoids the triggering of cell reselection criteria while WTRU 20 has E-DCH resources allocated. In accordance with this disclosed method, processor 21 prevents WTRU 20 from making cell reselections. The periods during which WTRU 20 is prevented from making cell reselection are referred to hereinafter as No_Reselection periods. The start of a No_Reselection period may be defined to occur under one or more conditions. For example, a No_Reselection may occur after WTRU 20 makes the first preamble transmission, after WTRU 20 has received a resource assignment on the AICH (AI or E-AI), or after WTRU 20 has received an indication that the contention resolution phase has terminated successfully.

Likewise, the end of a No_Reselection period may be linked to one or more of a number of reselection conditions. These reselection conditions include the release of an E-DCH resource by WTRU 20, receipt of a negative acknowledgement (NACK) on the AICH (AI or E-AI) in response to a resource request by WTRU 20, or a determination that the contention resolution has been unsuccessful by WTRU 20.

While in a No_Reselection period, WTRU 20 continues monitoring the best cell, making measurements and reporting the measurements to higher layers. WTRU 20, using these measurements, also continues to rank the cells. When a better cell, according to a set of criteria broadcasted over the System Information Broadcast (SIB), is found (that is after the Treselection timer has expired), WTRU 20 does not necessarily select the cell, but marks the cell as the Current_Best_Cell. WTRU 20 may use, for example, the received signal strength to determine whether there is a better cell.

If WTRU 20 holds the E-DCH resource for a continuous and extended period of time, WTRU 20 may change the ranking of the cell, and thus a new cell may become ranked better than the Current_Best_Cell during the No_Reselection period.

If a new cell is found to have a better ranking than the Current_Best_Cell, WTRU 20 may monitor the ranking and keep track of the ranking, or it may alternatively restart a Treselection timer or another timer used for the cases where a new cell is better ranked during a No_Reselection period. WTRU 20 may update the marked Current_Best_Cell to the new cell if the new cell is better ranked than the Current_Best_Cell, or the new cell is better ranked than the Current_Best_Cell for a certain time interval (e.g., Treselection, a new timer, or a scaled version of Treselection). Alternatively, the Current_Best_Cell value may not be updated by WTRU 20 even if a better ranked cell is found.

At the end of the No_Reselection period, WTRU 20 immediately sends a CELL_UPDATE on the Current_Best_Cell to the network. At this time, WTRU 20 either resets the Treselection timer to zero, stops the timer, or allows the timer to continue if a new cell is better ranked than the Current_Best_Cell and the serving cell. WTRU 20 may also include additional information in the CELL_UPDATE message to inform the network about changes that have occurred since the last CELL_UPDATE. For example, WTRU 20 may inform the network about the number of Current_Best_Cell changes that have occurred during the No_Reselection period, which allows the network to have an idea about the mobility of WTRU 20. In case of multiple changes of Current_Best_Cell, the WTRU can either send the CELL_UPDATE message in all cases or only in cases where the Current_Best_Cell is different from the serving cell at the start of the No_Reselection period.

If at the end of the No_Reselection period, a new cell is better ranked than the serving cell and the Current_Best_Cell, WTRU 20 does not send a CELL_UPDATE immediately on the Current_Best_Cell. Instead, WTRU 20 may start a timer (e.g., same, different, or a scaled version of the Treselection timer), and only send the CELL_UPDATE if the higher ranking persists for the duration of the timer.

Alternatively, if a cell reselection timer (i.e., Treselection or a new timer) was started when a new cell became better ranked than the Current_Best_Cell, WTRU 20 may wait for the timer to expire prior to initiating the CELL_UPDATE to the new cell. Alternatively, WTRU 20 may immediately perform a cell reselection to the new cell and send a CELL_UPDATE to the new cell. Alternatively, if the new cell is not better ranked for the duration of the specified time interval, WTRU 20 may reselect to the Current_Best_Cell or remain in the current serving cell.

In an alternative disclosed method, while WTRU 20 has common E-DCH resources, WTRU 20 behaves as though a Cell Reselection has just occurred. The ranking and Treselection timers are decoupled from the cell reselection decision. During the No_Reselection period, WTRU 20 continues to make measurements and to report these measurements to higher layers. At each measurement period, WTRU 20 ranks the cells and starts the Treselection timer if a better cell is found. This timer may be reset (or reset and restarted) each time a new best cell is ranked as better than the serving cell. Alternatively, the timer can be allowed to continue (only being reset if the serving cell is ranked as the best cell). At the end of the No_Reselection period, if the Treselection timer has been started, the timer exceeds the Treselection limit, and the best cell is different from the serving cell at the start of the No_Reselection period, WTRU 20 may then immediately declare a cell reselection.

If, at the end of the No_Reselection period, the Treselection timer is running, and it has not exceeded the Treselection limit required to declare a cell reselection, WTRU 20 may let the timer continue. WTRU 20 then proceeds with the legacy (Release 7) cell reselection evaluation procedure. Alternatively, WTRU 20 may reset/restart the Treselection timer at the end of the No_Reselection period then proceed when the legacy cell reselection evaluation procedure.

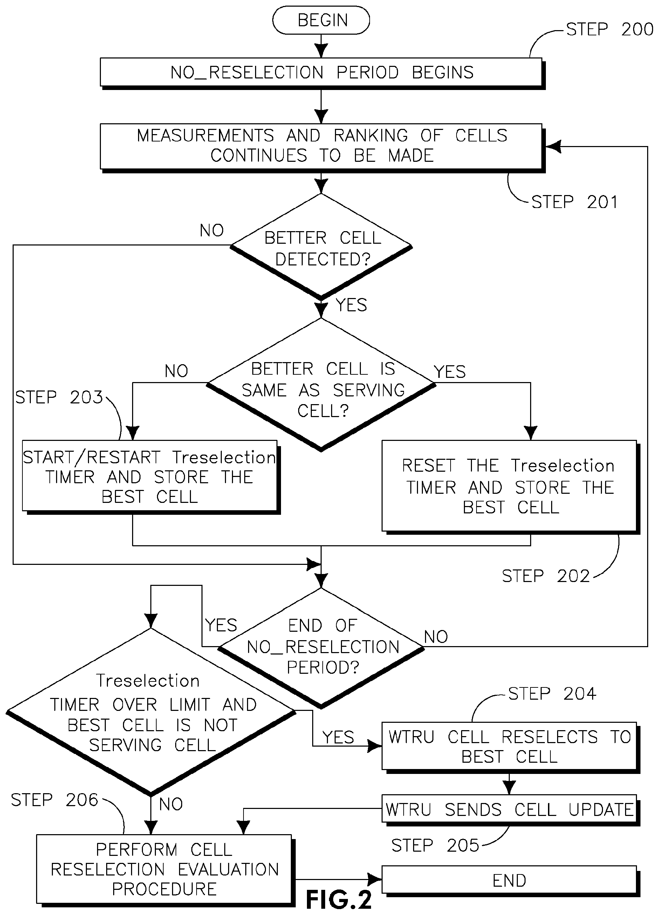

An example flow diagram of this disclosed method is illustrated in Figure 2. A processor included in a WTRU detects the occurrence of a condition which starts a No_Reselection period (step 200). The WTRU continues to make measurements and rank cells to determine a Current_Best_Cell (step 201). If a better cell is detected using the measurements and the better cell is the same as the serving cell, the Treselection timer is reset and the best cell stored (step 202). If the better cell is not the same as the serving cell, the Treselection timer is started/restarted and the best cell stored (step 203).

A check for the end of No_Reselection period is then performed. If the No_Reselection period has not ended, the WTRU continues to take measurements and rank cells (step 204). If the end of No-Reselection period is detected, the Treselection then is over the limit and the stored best cell is not the serving cell, the WTRU cell reselects to the stored best cell (step 205) and transmits a CELL_UPDATE message (step 206). The WTRU then performs the cell reselection evaluation procedure (step 207).

If the Treselection time is not over the limit and/or the best cell is the serving cell, the WTRU performs the cell reselection evaluation procedure (step 208).

If the WTRU does not detect a better cell using the measurements taken, a check for the end of No_Reselection period is performed.

In an alternative example, WTRU 20 is prevented from initiating an E-RACH access if WTRU 20 determines that cell reselection is imminent or highly possible during the E-RACH transmission. Whether cell reselection is imminent or highly likely may be determined wherein if a neighboring cell is better ranked than the serving cell, or if a neighboring cell is better ranked than the serving cell, and one or a combination of the following criteria (referred to as cell reselection likelihood criteria) is met:

- Treselection timer is running;
- N percent of the Treselection time interval has elapsed since the time a new cell was better ranked than a serving cell, where N is a system configured value, a predetermined value, or a value determined by WTRU 20;
- Treselection timer will expire in a time interval lower than N (i.e. time remaining < N), where N may be a system configured value, a predetermined value, or a value determined by the WTRU;
- the total amount of data bits to be sent in the UL is greater than N, when N is a system configured value broadcasted over this SIBs, preconfigured or predetermined in the WTRU, or a value determined by the WTRU;
- the maximum time required to transmit the UL data (i.e. at the lowest data rate and taking into account maximum time to get E-RACH acquisition and resource assignment) is less than the time remaining for Treselection to expire;
- the WTRU considers itself a high-mobility WTRU. Optionally the WTRU can use a new measure to conclude that it performs a high number of cell reselections;
- UL data is of a specific logical channel type (i.e., CCCH or DTCH), for example, if CCCH data is to be transmitted, the WTRU is allowed to perform E-RACH access. If DTCH or DCCH the WTRU may be restricted from making an E-RACH access; and/or
- the WTRU has a dedicated E-RNTI assigned, for example, if an E-RNTI has been assigned, the WTRU is restricted from making an E-RACH access; otherwise the WTRU may perform an E-RACH access and transmit the data over the source cell.

In accordance with this method, the thresholds, parameters, restriction (i.e., N) may be configured by the network 10 and provided to the WTRU via system information broadcast.

Alternatively, WTRU 20 is restricted from making an E-RACH access when the signal quality of the serving cell is decreasing over one or more measurement periods, e.g., if WTRU 20 determines that the Serving Cell Criteria is not met or that the signal strength of the serving cell is below a system configured threshold.

This restriction may not apply, though, to emergency call scenarios. WTRU 20 may choose to perform Release 99 (R99) RACH access if one of the criteria that restricts E-RACH access is satisfied.

When E-RACH access is restricted and WTRU 20 has uplink (UL) data to transmit, the Treselection timer may be scaled by scaling factor in order to allow WTRU 20 to perform faster cell reselection and reduce UL data transfer delay. The scaling factor may be broadcast in the SIBs, preconfigured in WTRU 20, or determined by WTRU 20.

Alternatively, WTRU 20 may immediately perform cell reselection even if the Treselection timer has not expired, and the conditions to restrict E-RACH access have been met.

If the condition that has prevented WTRU 20 from initiating E-RACH access does not persist (e.g., a new cell is not better ranked) for Treselection time, WTRU 20 may then start E-RACH access.

If E-RACH access is restricted due to the detection of the cell reselection criteria specified above, WTRU 20 may include an indication in the CELL_UPDATE, or via the SI, of the amount of new data WTRU 20 has to send. Network 10 may then pre-allocate contention free E-DCH resources for WTRU 20 for sending this UL data on the target cell. An index to the resources may be sent to WTRU 20 via the CELL_UPDATE CONFIRM message or via an high speed shared control channel (HS-SCCH) order.

Alternatively, WTRU 20 is allowed to start E-RACH access if the cell reselection criteria is not triggered while the WTRU is in the preamble ramp up phase. For example, if WTRU 20 has sent a preamble, does not receive the AICH response when expected, and the timer to perform cell reselection has expired, WTRU 20 abandons the E-RACH access procedure and performs cell reselection.

In another disclosed example the UL data rate and/or grant is limited when cell reselection criteria is met (i.e., Treselection timer expires) while WTRU 20 has UL resources, and/or WTRU 20 is not prohibited from accessing E-RACH as described above, but one or more of the cell reselection likelihood criteria disclosed above are met.

The limitation in data rate (i.e., E-TFCI used) or grant may occur during E-RACH access when the cell reselection criteria occurs or as soon as E-RACH access is initiated (UL data initiation). The data rate may be independently controlled by WTRU 20 when a cell reselection criteria is met. WTRU 20 determines the TB size to use based on the measurements taken on the two cells, or alternatively, be configured from the network. Network 10 may configure WTRU 20 with one or a set of TB to use in case cell reselection criteria has been met while WTRU 20 is transmitting in the UL. The configuration of TB size(s) can be broadcasted over the SIBs, preconfigured or predetermined by WTRU 20, or limited to the E-DCH minimum set E-TFCI.

In the alternative, the data rate and/or grant is controlled by Node B 30. WTRU 20 sends an indication to Node B 30 when the cell reselection timer expires, or when initiating RACH access, and WTRU 20 is aware that a cell reselection is imminent or highly possible during E-RACH transmission, based on the cell reselection likelihood criteria disclosed above.

The indication may be transmitted to Node B 30 by WTRU 20 using a special reserved value of the SI for indicating cell reselection criteria. WTRU 20 sends an SI with TEBS = 0 and/or power headroom equal to zero. Alternatively, a reserved field of LCH-ID is used for the Highest priority Logical channel ID (HLID) to indicate that a cell reselection criteria has occurred in the WTRU. A new triggering criteria may also be introduced to trigger an SI when cell reselection criteria is met while WTRU 20 has shared E-DCH resources assigned.

A special reserved value of E-TFCI in the E-DPCCH may also be used to transmit the indication or a reserved CQI value in the HS-DPCCH, if configured, or the indication may also be appended to a MAC-e or MAC-i PDU. The presence of this indication may be signaled via the MAC-e or MAC-i header (e.g., a special LCH-ID value or a one bit value following the reserved value for LCH-ID for SI). Layer 1 (L1)/Layer 2 (L2) may also be used, as well as a Layer 3 (L3) message that can append measurement results from the neighboring cells including the cell IDs.

Upon reception of this indication by Node B 30, Node B 30 may conduct one or more of the following:

- decrease absolute grant value;
- release E-DCH resources and explicitly indicate this to the WTRU;
- provide an HS-SCCH order to grant WTRU permission to perform cell reselection;
- use L3 message to indicate to the WTRU to proceed with the cell reselection;
- the network may pre-allocate contention free E-DCH resources for the target cell and provide the information to the WTRU, by signaling an index to the broadcasted information in the target cell, or providing the resources via RRC messages. The network may optionally provide an activation time in which the WTRU can start using this E-DCH resources, as well;
- use L3 message (i.e. RRC reconfiguration message) to move the WTRU to CELL_DCH with the target cell acting as the HS-DSCH serving cell; and/or
- use L3 or active set update to immediately move the WTRU to a soft handover with the serving cell being the source or the target cell.

In an alternative disclosed example, the network determines that the WTRU is subject to causing significant interference to a given cell based on the measured level of the signal received at different cells from WTRU 20 when it is initiating access over E-DCH. Such assessment may occur at one, or many different stages of WTRU transmissions. For example, network 10 may make an assessment during preamble transmission (i.e., the last preamble transmission before AICH/E-AICH transmission), during E-DCH transmission before contention resolution, and during E-DCH transmission after contention resolution.

Such an assessment could be done within cells belonging to a same Node B. Accordingly, upon determining that the interference WTRU 20 is causing, or would cause, to a given cell exceeds a threshold, network 10 may decide not to allocate any resources to WTRU 20, through the transmission of "NACK" over AICH (AI or E-AI). This action by network 10 is possible if the determination takes place when the WTRU is transmitting the preamble for access, before resources are allocated. Network 10 may also allocate resources with a small default grant. If WTRU 20 is already transmitting using common E-DCH resource, network 10 may decide to release the resources allocated to WTRU 20 using an indication to WTRU 20 to perform cell reselection after releasing the resources. Such an indication could, for example, be signaled using special values of the E-AGCH using the E-RNTI associated with the resource, or the WTRU dedicated E-RNTI if available. The resources may also be released using an indication to WTRU 20 to not re-attempt access before a certain delay that could also be signaled.

WTRU 20, upon receiving an indication to release the resources releases E-DCH resources, and performs cell reselection. Releasing of the E-DCH resources includes clearing the E-RNTI, ceasing E-DCH transmission and reception procedures, flushing HARQ buffers, resetting TSN of all logical channels or priority queues or, discarding any un-transmitted part or segment of an RLC PDU that has been stored by the MAC segmentation function, and performing MAC-is/i reset.

When cell reselection occurs due to such indication from the network, WTRU 20 may use different cell reselection parameters (e.g., Qhyst, Treselection) than in the normal cell reselection procedure. For example, WTRU 20 may evaluate the criteria using Qhyst = 0 and Treselection = 0. In addition, layer 3 filtering of measurements may be eliminated or modified through the use of a different filter parameter. The values of these parameters may be signaled over system information or pre-determined. In the case where WTRU 20 receives an indication to not re-attempt access before a delay was signaled, WTRU 20 waits for this duration before accessing E-DCH resources to perform the CELL_UPDATE procedure.

In another disclosed example, a WTRU 20 that has E-DCH resources allocated determines that cell reselection should be performed. WTRU 20 makes this determination if one or more criteria is met. This criteria includes, for example, the percent failed MAC Packet Data Units (PDUs) is higher than a system or predefined threshold value, if WTRU 20 does not receive any HARQ feedback for x consecutive transmissions or for a system configured amount of time, radio link failure occurs, physical layer post-verification fails.

When WTRU 20 determines that it should perform cell reselection, WTRU 20 releases E-DCH resources and performs cell reselection. As disclosed above, when cell reselection occurs as a result one or more of the above criteria, WTRU 20 may use different cell reselection parameters (e.g., Qhyst, Treselection) than in the normal cell reselection procedure. For example, WTRU 20 may evaluate the criteria using Qhyst = 0 and Treselection = 0. In addition, layer 3 filtering of measurements may be eliminated or modified through the use of a different filter parameter. The values of these parameters may be signaled over system information or pre-determined.

In another disclosed example WTRU 20 suspends all cell reselection decisions during the No-Reselection periods. However WTRU 20 continues to make measurements and reports them to higher layers. The higher layer, though, does not use these measurements for cell reselection. The Treselection timer and the mobility counts can be suspended, reset, or stopped. The higher layers may perform L3 filtering of the measurements but not perform any ranking during the No_Reselection period. Alternatively, ranking may still be performed but no cell reselection timers initiated.

At the end of the No_Reselection period, the timer and the counts are restarted. WTRU 20 ranks the cells in the detected set, or alternatively uses the ranking performed by higher layers during the No_Reselection period. If at the end of the No_Reselection period a new cell is better ranked than the serving cell, the Treselection timer is immediately started. Alternatively, the Treselection timer may be scaled down if a cell has been found better ranked during the No_Reselection period.

If the serving cell at the start of the No_Reselection period is no longer on the detected set, the serving cell is considered to be at the bottom of the ranking. WTRU 20 can then make a cell reselection decision without waiting the Treselection time interval, or WTRU 20 may confirm that the serving cell in no longer detected for a period of time, using Treselection or some new timer, before making such a decision.

In another alternative example, WTRU 20 performs a cell ranking prior to attempting an Enhanced RACH access. The cell reselection algorithm, in accordance with this method, is skewed to force WTRU 20 into cell reselection if favorable conditions exist, which are based on monitoring the cell ranking. For example, the serving cell is no longer the best cell for the last T_x ms, where T_x is specified, broadcast in the system information, or based on Treselection, or a neighbor cell is better ranked than the serving cell for at least K out of the last N measurement periods.

WTRU 20, in an alternative method, may utilize different cell reselection parameters for deciding whether it reselects to a cell that is utilizing the same frequency as the cell WTRU 20 is currently connected to. These parameters include, but are not limited to, Treselection and Qhyst, which may be called Treselection_intra or Qhyst_intra. The parameters are set to lower values than in the inter-frequency case such that WTRU 20 performs cell reselection after a shorter time and for a shorter difference in cell quality. The criteria therefore resulting from these modifications may be applicable only for those WTRUs supporting and/or utilizing the Enhanced Uplink in CELL_FACH state feature.

The values of these parameters may be explicitly signaled over system information messages. Alternatively, scaling factors may be signaled for the parameters, which may be applied to Treselection and Qhyst, to obtain the values of Treselection_intra and Qhyst_intra.

A processor in association with software may be used to implement a radio frequency transceiver for use in a wireless transmit receive unit (WTRU), user equipment (WTRU), terminal, base station, radio network controller (RNC), or any host computer. The WTRU may be used in conjunction with modules, implemented in hardware and/or software, such as a camera, a video camera module, a videophone, a speakerphone, a vibration device, a speaker, a microphone, a television transceiver, a hands free headset, a keyboard, a Bluetooth® module, a frequency modulated (FM) radio unit, a liquid crystal display (LCD) display unit, an organic light-emitting diode (OLED) display unit, a digital music player, a media player, a video game player module, an Internet browser, and/or any wireless local area network (WLAN) or Ultra Wide Band (UWB) module.

**Claims**

1. A method for controlling cell reselection in a wireless transmit receive unit ,WTRU (20), configured to transmit on common enhanced dedicated channel, E-DCH, resources in CELL-FACH state comprising:

   determining (200) the start of a no reselection period; and
   on the condition that the no reselection period has started, restricting cell reselection to a new cell until a reselection condition is detected **characterized by** the WTRU continuing (201) to make and report measurements, and rank neighboring cells during the no reselection period while the WTRU has an allocated common E-DCH resource.

2. The method of claim 1, wherein the start of the no reselection period is triggered by one or more of the WTRU transmitting a first preamble, and receiving at the WTRU an acknowledgement including an enhanced dedicated channel ,E-DCH, resource assignment.

3. The method of claim 2, wherein the start of the no reselection period is triggered by the receipt of an indication that a contention resolution phase has terminated successfully.

4. The method of claim 2, further comprising:

   ranking cells based on a reselection criteria; and
   detecting a cell that is ranked better than a current best cell based on the reselection criteria.

5. The method of claim 4, further comprising tracking the ranking of the cells.

6. The method of claim 5 further comprising
   restarting a reselection timer on the condition that a cell is better ranked than the current best cell during the no reselection period; and
   updating a new best cell to the better ranked cell.

7. The method of claim 6, further comprising detecting the one or more reselection conditions, thereby triggering the end of the no reselection period.

8. The method of claim 7, wherein the reselection conditions that trigger the end of the no reselection period include one or more of the release of an assigned E-DCH resource and the receipt of a non-acknowledgement in response to an E-DCH resource request.

9. The method of claim 8 further comprising, on the condition that the no reselection period has ended, that the new best cell is a different cell than the current best cell, and the new best cell has been ranked better than the current best cell for a predetermined time period,
   performing reselection to the new best cell; and
   transmitting a cell update message in the new best cell.

10. A wireless transmit receive unit, WTRU (20), for controlling cell reselection, the WTRU (20) being configured to transmit on common enhanced dedicated channel, E-DCH, resources in CELL-FACH state, and comprising:

    a processor (21) configured to detect the start of a no reselection period;
    wherein, on the condition that the no reselection period has started, reselection to a new cell is restricted until a reselection condition is detected by the processor **characterized by** the processor (21) being further configured to make and report measurements, and rank neighboring cells during the no reselection period while the WTRU has an allocated common E-DCH resource.

11. The WTRU of claim 10, wherein the start of the no reselection period is triggered by one or more of the transmission of a first preamble by the WTRU, and the reception at the WTRU of an acknowledgement including a resource assignment.

12. The WTRU of claim 11, wherein the start of the no reselection period is triggered by the reception of an indication by the WTRU that a contention resolution phase has terminated successfully.

13. The WTRU of claim 12, wherein the processor is configured to detect a cell that is ranked better than a current best cell based on a reselection criteria.

14. The WTRU of claim 13, wherein a reselection timer is reset on the condition that a cell is better ranked than the current best cell during the no reselection period;
a new best cell updated to the better ranked cell.

15. The WTRU of claim 14, wherein the reselection condition triggers the end of the no reselection period.

16. The WTRU of claim 15, wherein the reselection conditions that trigger the end of the no reselection period include one or more of the release of an assigned E-DCH resource, and the receipt of a non-acknowledgement in response to an E-DCH resource request.

17. The WTRU of claim 16, further comprising :

on the condition that the no reselection period has ended, that the new best cell is a different cell than the current best cell, and the new best cell has been ranked better than the current best cell for a predetermined time period, the processor configured to perform reselection to the new best cell; and
a transmitter configured to transmit a cell update message in the new best cell.


**Patentansprüche**

1. Verfahren zur Steuerung von Zellenneuauswahl in einer drahtlosen Sende-Empfangs-Einheit, WTRU (20), die konfiguriert ist, um auf einem gemeinsamen verbesserten dedizierten Kanal, E-DCH, Ressourcen in einem CELL-FACH-Zustand zu senden, umfassend:

Bestimmen (200) des Starts eines Zeitraums ohne Neuauswahl; und unter der Bedingung, dass der Zeitraum ohne Neuauswahl begonnen hat, Einschränken der Zellenneuauswahl auf eine neue Zelle, bis eine Neuauswahlbedingung detektiert wird;
**dadurch gekennzeichnet, dass** die WTRU das Durchführen und Mitteilen von Messungen fortführt (201) und Nachbarzellen während des Zeitraums ohne Neuauswahl klassifiziert, während die WTRU eine zugewiesene gemeinsame E-DCH-Ressource aufweist.

2. Verfahren nach Anspruch 1, wobei der Start des Zeitraums ohne Neuauswahl durch ein oder mehr des Sendens durch die WTRU einer ersten Präambel und des Empfangs an der WTRU einer Bestätigung einschließlich einer Ressourcenzuweisung eines verbesserten dedizierten Kanals, E-DCH, ausgelöst wird.

3. Verfahren nach Anspruch 2, wobei der Start des Zeitraums ohne Neuauswahl durch den Empfang einer Angabe, dass eine Konfliktlösungsphase erfolgreich geendet hat, ausgelöst wird.

4. Verfahren nach Anspruch 2, ferner umfassend:

Klassifizieren von Zellen basierend auf einem Neuauswahlkriterium; und
Detektieren einer Zelle, die besser klassifiziert ist als eine aktuelle beste Zelle basierend auf dem Neuauswahlkriterium.

5. Verfahren nach Anspruch 4, ferner umfassend das Nachverfolgen des Klassifizierens der Zellen.

6. Verfahren nach Anspruch 5, ferner umfassend:

Neustarten eines Neuauswahlzeitgebers unter der Bedingung, dass eine Zelle während des Zeitraums ohne Neuauswahl besser klassifiziert ist als die aktuelle beste Zelle; und
Aktualisieren einer neuen besten Zelle auf die besser klassifizierte Zelle.

7. Verfahren nach Anspruch 6, ferner umfassend das Detektieren der einen oder mehreren Neuauswahlbedingungen, wodurch das Ende des Zeitraums ohne Neuauswahl ausgelöst wird.

8. Verfahren nach Anspruch 7, wobei die Neuauswahlbedingungen, die das Ende des Zeitraums ohne Neuauswahl auslösen, eines oder mehr des Freigebens einer zugewiesenen E-DCH-Ressource und des Empfangens einer Nicht-Bestätigung in Reaktion auf eine E-DCH-Ressourcenanfrage beinhalten.

9. Verfahren nach Anspruch 8, ferner umfassend unter der Bedingung, dass der Zeitraum ohne Neuauswahl geendet hat, dass die neue beste Zelle eine andere Zelle als die aktuelle beste Zelle ist und die neue beste Zelle während eines vorbestimmten Zeitraums besser klassifiziert worden ist als die aktuelle beste Zelle,
Durchführen einer Neuauswahl zur neuen besten Zelle; und
Senden einer Zellenaktualisierungsnachricht in der neuen besten Zelle.

10. Drahtlose Sende-Empfangs-Einheit, WTRU (20), zur Steuerung von Zellenneuauswahl, wobei die WTRU (20) konfiguriert ist, um auf einem gemeinsamen verbesserten dedizierten Kanal, E-DCH, Ressourcen in einem CELL-FACH-Zustand zu senden, und umfassend:

einen Prozessor (21), der konfiguriert ist, um den Start eines Zeitraums ohne Neuauswahl zu detektieren; wobei, unter der Bedingung, dass der Zeitraum ohne Neuauswahl begonnen hat, die Neuauswahl zu einer neuen Zelle eingeschränkt wird, bis eine Neuauswahlbedingung von dem Prozessor detektiert wird;
**dadurch gekennzeichnet, dass** der Prozessor (21) ferner konfiguriert ist, um Messungen durchzuführen und mitzuteilen und Nachbarzellen während des Zeitraums ohne Neuauswahl zu klassifizieren, während die WTRU eine zugewiesene gemeinsame E-DCH-Ressource aufweist.

11. WTRU nach Anspruch 10, wobei der Start des Zeitraums ohne Neuauswahl durch ein oder mehr des Sendens einer ersten Präambel durch die WTRU und des Empfangens an der WTRU einer Bestätigung einschließlich einer Ressourcenzuweisung ausgelöst wird.

12. WTRU nach Anspruch 11, wobei der Start des Zeitraums ohne Neuauswahl durch den Empfang einer Angabe von der WTRU, dass eine Konfliktlösungsphase erfolgreich geendet hat, ausgelöst wird.

13. WTRU nach Anspruch 12, wobei der Prozessor konfiguriert ist, um eine Zelle zu detektieren, die besser klassifiziert ist als eine aktuelle beste Zelle basierend auf einem Neuauswahlkriterium.

14. WTRU nach Anspruch 13, wobei ein Neuauswahlzeitgeber unter der Bedingung, dass eine Zelle während des Zeitraums ohne Neuauswahl besser klassifiziert ist als die aktuelle beste Zelle, zurückgesetzt wird;
eine neue beste Zelle auf die besser klassifizierte Zelle aktualisiert wird.

15. WTRU nach Anspruch 14, wobei die Neuauswahlbedingung das Ende des Zeitraums ohne Neuauswahl auslöst.

16. WTRU nach Anspruch 15, wobei die Neuauswahlbedingungen, die das Ende des Zeitraums ohne Neuauswahl auslösen, ein oder mehr des Freigebens einer zugewiesenen E-DCH-Ressource und des Empfangens einer Nicht-Bestätigung in Reaktion auf eine E-DCH-Ressourcenanfrage beinhalten.

17. WTRU nach Anspruch 16, ferner umfassend:

unter der Bedingung, dass der Zeitraum ohne Neuauswahl geendet hat, dass die neue beste Zelle eine andere Zelle als die aktuelle beste Zelle ist und die neue beste Zelle während eines vorbestimmten Zeitraums besser klassifiziert worden ist als die aktuelle beste Zelle,
der Prozessor konfiguriert ist, um eine Neuauswahl zur neuen besten Zelle durchzuführen; und
ein Sender konfiguriert ist, um eine Zellenaktualisierungsnachricht in der neuen besten Zelle zu senden.

**Revendications**

1. Procédé de commande d'une resélection de cellules dans une unité d'émission réception sans fil WTRU (20), configuré pour émettre sur des ressources de canal dédié amélioré commun E-DCH dans l'état CELL-FACH comprenant de :

   déterminer (200) le début d'une période de non resélection ; et à condition que la période de non resélection ait démarré, restreindre la resélection de cellules à une nouvelle cellule jusqu'à ce qu'une condition de non resélection soit détectée ;
   **caractérisé en ce que** la WTRU continue (201) à faire et rapporter les mesures et classer hiérarchiquement les cellules voisines pendant la période de non resélection pendant que la WTRU se voit allouer une ressource E-DCH commune allouée.

2. Procédé selon la revendication 1, dans lequel le début de la période de non resélection est déclenché par un ou plusieurs de la WTRU émettant un premier préambule et recevant au niveau de la WTRU un accusé de réception incluant une assignation de ressources de canal dédié amélioré E-DCH.

3. Procédé selon la revendication 2, dans lequel le début de la période de non resélection est déclenché par la réception d'une indication qu'une phase de résolution de contentieux a pris fin avec succès.

4. Procédé selon la revendication 2, comprenant en outre de :

   classer hiérarchiquement des cellules sur la base d'un critère de resélection ; et
   détecter une cellule qui est mieux classée hiérarchiquement qu'une meilleure cellule actuelle sur la base des critères de resélection.

5. Procédé selon la revendication 4, comprenant en outre de garder la trace du classement hiérarchique des cellules.

6. Procédé selon la revendication 5, comprenant en outre de :

   redémarrer un temporisateur de resélection à condition qu'une cellule soit mieux classée hiérarchiquement que la meilleure cellule actuelle pendant la période de non resélection ; et
   mettre à jour une nouvelle meilleure cellule sur la meilleure cellule classée hiérarchiquement.

7. Procédé selon la revendication 6, comprenant en outre de détecter une ou plusieurs conditions de resélection, en déclenchant ainsi la fin de la période de non resélection.

8. Procédé selon la revendication 7, dans lequel les conditions de resélection qui déclenchent la fin de la période de non resélection incluent une ou plusieurs de la libération de ressources E-DCH assignées et la réception d'un accusé de non réception en réponse à une demande de ressources E-DCH.

9. Procédé selon la revendication 8, comprenant en outre, à condition que la période de non resélection ait pris fin, que la nouvelle meilleure cellule soit une cellule différente de la meilleure cellule actuelle et la nouvelle meilleure cellule ait été mieux classée hiérarchiquement que la meilleure cellule actuelle pour une période de temps prédéterminée, effectuer une resélection sur la nouvelle meilleure cellule ; et
   émettre un message de mise à jour de cellule dans la nouvelle meilleure cellule.

10. Unité d'émission réception sans fil WTRU (20) pour commander une resélection de cellule, la WTRU (20) étant configurée pour émettre sur des ressources de canal dédié amélioré commun E-DCH dans l'état CELL-STATE, et comprenant :

    un processeur (21) configuré pour détecter le début d'une période de non resélection ;
    dans lequel, et à condition que la période de non resélection ait démarré, une resélection d'une nouvelle cellule est restreinte jusqu'à ce qu'une condition de resélection soit détectée par le processeur ;
    **caractérisé en ce que** le processeur (21) est configurée en outre pour faire et rapporter les mesures et classer hiérarchiquement les cellules voisines pendant la période de non resélection pendant que la WTRU se voit allouer une ressource E-DCH commune allouée.

**11.** WTRU selon la revendication 10, dans laquelle le début de la période de non resélection est déclenché par une ou plusieurs de l'émission d'un premier préambule par la WTRU et la réception au niveau de la WTRU d'un accusé de réception incluant une assignation de ressources.

**12.** WTRU selon la revendication 11, dans laquelle le début de la période de non resélection est déclenché par la réception d'une indication qu'une phase de résolution de contentieux a pris fin avec succès.

**13.** WTRU selon la revendication 12, dans lequel le processeur est configuré pour détecter une cellule qui est mieux classée hiérarchiquement qu'une meilleure cellule actuelle sur la base d'un critère de resélection.

**14.** WTRU selon la revendication 13, dans laquelle un temporisateur de resélection est réinitialisé à condition qu'une cellule soit mieux classée hiérarchiquement que la meilleure cellule actuelle pendant la période de non resélection ; une nouvelle meilleure cellule est mise à jour sur la meilleure cellule classée hiérarchiquement.

**15.** WTRU selon la revendication 14, dans laquelle la condition de resélection déclenche la fin de la période de non resélection.

**16.** WTRU selon la revendication 15, dans laquelle les conditions de resélection qui déclenchent la fin de la période de non resélection incluent une ou plusieurs de la libération d'une ressource E-DCH assignée et la réception d'un accusé de non réception en réponse à une demande de ressources E-DCH.

**17.** WTRU selon la revendication 16, comprenant en outre de :

à condition que la période de non resélection a pris fin, que la nouvelle meilleure cellule est une cellule différente de la meilleure cellule actuelle et que la nouvelle meilleure cellule a été mieux classée hiérarchiquement que la meilleure cellule actuelle pendant une période de temps prédéterminée ;
le processeur configuré pour effectuer une resélection sur la nouvelle meilleure cellule ;
un émetteur configuré pour émettre un message de mise à jour de cellule dans la nouvelle meilleure cellule.

**FIG. 1**

EP 2 266 348 B1

FIG.2